# EUROPÄISCHE PATENTSCHRIFT

(11) **EP 1 670 561 B1**
(45) Veröffentlichungstag und Bekanntmachung des Hinweises auf die Patenterteilung: **12.08.2009**
(21) Anmeldenummer: 04761057.1
(22) Anmeldetag: 01.10.2004
(51) Int. Cl.: B01D 11/04, B01D 1/22, B01J 19/18

(54) **DÜNNSCHICHTVERDAMPFER**
THIN-FILM EVAPORATOR
VAPORISATEUR A COUCHE MINCE

(30) Priorität: 02.10.2003 AT 15672003
(43) Veröffentlichungstag der Anmeldung: 21.06.2006
(73) Patentinhaber: VTU Holding GmbH, 8074 Grambach (AT); Glasl, Wolfgang, 8010 Graz (AT)
(72) Erfinder: GLASL, Wolfgang, A-8010 Graz (AT); SIEBENHOFER, Matthaeus, A-8854 Krakaudorf (AT); KONCAR, Michael, A-8501 Lieboch (AT)
(74) Vertreter: Kopecky, Helmut
(86) Internationale Anmeldenummer: PCT/AT2004/000335
(87) Internationale Veröffentlichungsnummer: WO 2005/030358

(56) Entgegenhaltungen:
- WO-A-93/02075
- DE-A- 3 240 725
- FR-A- 1 601 580
- US-A- 6 066 232
- US-A1- 2002 134 517

## Beschreibung

Die Erfindung betrifft einen Dünnschichtverdampfer mit einer senkrecht stehenden Trommel, einer im oberen Bereich der Trommel angeordneten Zuführung für ein zu verdampfendes Medium, einem an ihrem Umfang angeordneten, Brüden bildenden Heizmantel, einer den Rückstand im unteren Endbereich der Trommel ableitenden Ableitung sowie einem mit einem Kühlmedium versorgten, im Zentralbereich der Trommel angeordneten Kondensator und einer innenseitig entlang des Trommelmantels bewegbaren Wischeinrichtung für ein von oben in die Trommel eingeleitetes zu verdampfendes Medium.

Temperaturempfindliche Stoffe, wie beispielsweise pharmazeutische Lösungen oder Lebensmittelkonzentrate, dürfen nur kurzzeitig auf Siedetemperatur erhitzt werden. Zur Erfüllung dieser Anforderung dienen sogenannte Dünnschichtverdampfer, in denen das zu verdampfende Medium bzw. die einzudampfende Lösung nur als dünner Film auf die Verdampfer-Fläche aufgebracht wird. Hierdurch ergibt sich eine nur kurze Kontaktzeit mit der Heizfläche, sodass auch thermisch instabile Flüssigkeiten bzw. Stoffe eingesetzt werden können und diese insbesondere auch im Vakuum oder bei sehr geringem Druck nur einer niedrigen Verdampfungstemperatur ausgesetzt sind. Weiters werden Dünnschichtverdampfer für Trennaufgaben eingesetzt, wenn das als Rückstand anfallende Produkt schlechte Fließeigenschaften besitzt und/oder zu Verklebungen neigt.

Dünnschichtverdampfungsprozesse beruhen auf dem Prinzip der einfachen Destillation, wodurch die Trennleistung dieses Verdampfertyps limitiert ist. Dünnschichtverdampfer gibt es in unterschiedlichen Bauarten, beispielsweise als Fallfilmverdampfer oder als Rotorverdampfer (bekannt aus Chemie Technik von Dr. Ing. Eckhard Ignatowitz, 5. Auflage, Europafachbuchreihe, Seite 306).

Die WO 93/02075 A offenbart einen Dünnschichtverdampfer mit einer senkrecht stehenden Trommel, einer im oberen Bereich der Trommel angeordneten Zuführung für ein zu verdampfendes Medium, einem an ihrem Umfang angeordneten, Brüden bildenden Heizmantel, einer den Rückstand im unteren Endbereich der Trommel ableitenden Ableitung, einem mit einem Kühlmedium versorgten Kondensator und einer den Kondensator umgebende Wischvorrichtung.

Die Erfindung stellt sich die Aufgabe, den Verdampfertyp Dünnschichtverdampfer zu verbessern, und zwar insbesondere hinsichtlich einer Erhöhung der Trennleistung, wobei vorteilhaft auch eine Energieeinsparung - vorzugsweise sowohl der Kühl- als auch der Heizenergie - und gegebenenfalls auch eine chemische Reaktion während des Verdampfungsprozesses durchführbar bzw. beschleunigbar sein soll.

Diese Aufgabe wird erfindungsgemäß beim Verdampfertyp Dünnschichtverdampfer dadurch gelöst, dass auf dem Weg der Brüden vom Heizmantel zum Kondensator eine die Wirkungsweise des Dünnschichtverdampfers beeinflussende Inneneinrichtung vorgesehen

ist, wobei die Inneneinrichtung zwischen dem Kondensator und der Wischeinrichtung vorgesehen ist.

Hierbei ist zweckmäßig die Inneneinrichtung im Querschnitt kreisringförmig gestaltet. Ferner ist sie zweckmäßig als Stoffaustauschfläche gestaltet.

Gemäß einer bevorzugten Ausführungsform ist die Inneneinrichtung als Katalysator, insbesondere als heterogener Katalysator, ausgebildet.

Eine effiziente Energieeinsparung lässt sich dadurch erzielen, dass die Inneneinrichtung als Wärmeaustauschfläche ausgebildet ist und vorzugsweise zur Vorwärmung des zu verdampfenden Mediums an eine Zuleitung für das zu verdampfende Medium angeschlossen ist.

Ein Rotor-Dünnschichtverdampfer ist besteht ferner darin, dass die Inneneinrichtung zwischen dem Kondensator und einer innenseitig entlang des Trommelmantels bewegbaren Wischeinrichtung für ein von oben in die Trommel eingeleitetes zu verdampfendes Medium vorgesehen ist.

Für einen Fallfilmverdampfer lässt sich die Erfindung ebenfalls anwenden, wobei dieser dann mindestens zwei Trommeln aufweist.

Der Kondensator ist im Zentralbereich der Trommel angeordnet.

Gemäß einer bevorzugten Ausführungsform ist eine Zuleitung für einen die Wirkungsweise des Dünnschichtverdampfers beeinflussenden Stoff, insbesondere Flüssigkeit, wie eine Reaktionsflüssigkeit, eine Reinigungsflüssigkeit oder Rückstand oder Destillat, zur Inneneinrichtung geführt.

Die Inneneinrichtung kann als Drahtdoppelzylinder ausgeführt und vorzugsweise mit Füllkörpern oder Katalysatoren gefüllt sein oder auch als Drahtgestrick oder als zylindrischer Packungsring ausgebildet sein.

Eine bevorzugte Ausführungsform ist dadurch gekennzeichnet, dass die Inneneinrichtung bewegbar ist, u.zw. in dem Zwischenraum zwischen Heizmantel und Kondensator, insbesondere in eine Drehbewegung versetzbar ist, wobei zweickmäßig die Inneneinrichtung mit der Mischeinrichtung bewegbar ist, insbesondere mit dieser gekoppelt ist.

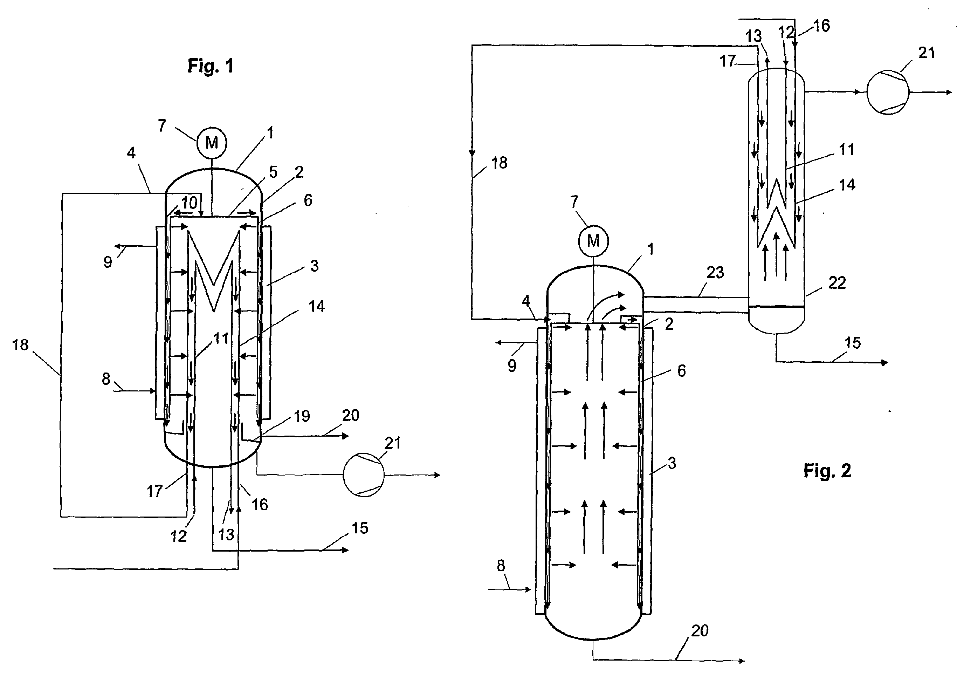

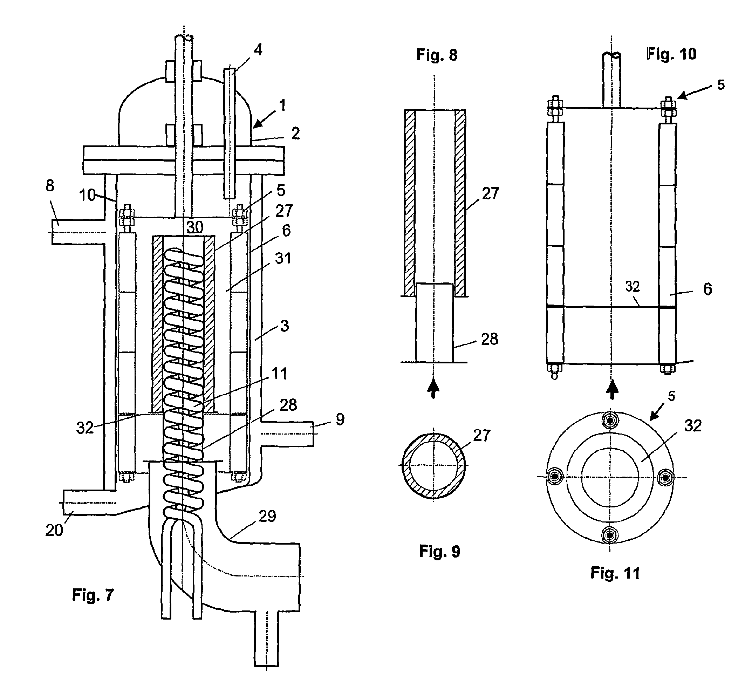

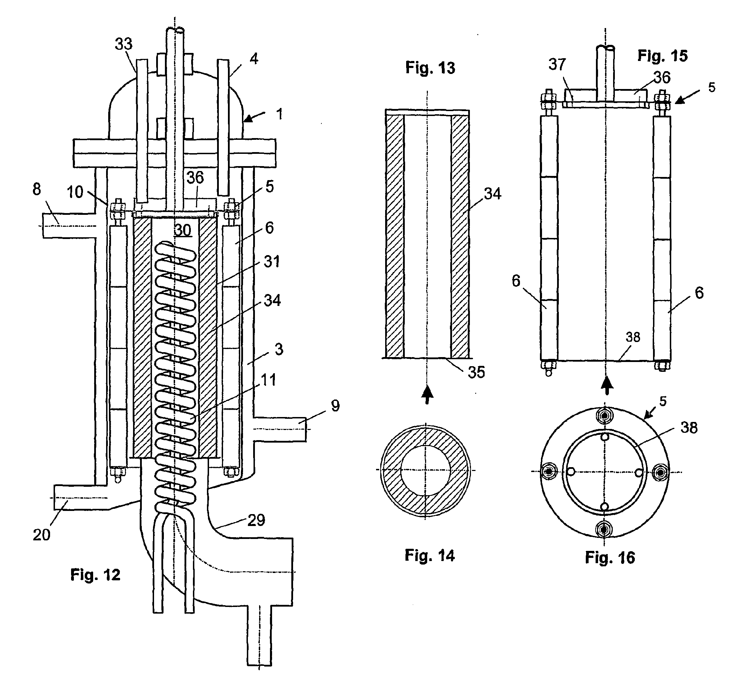

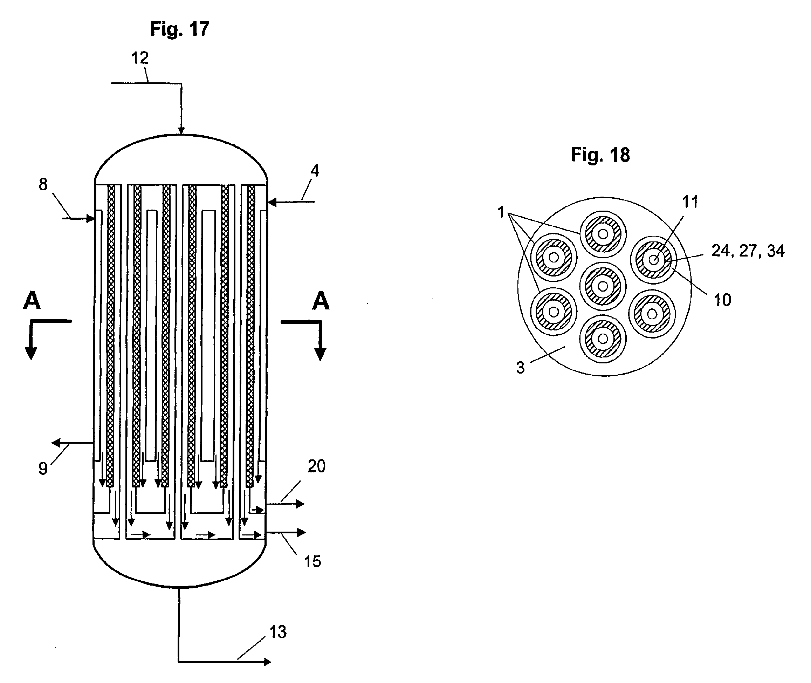

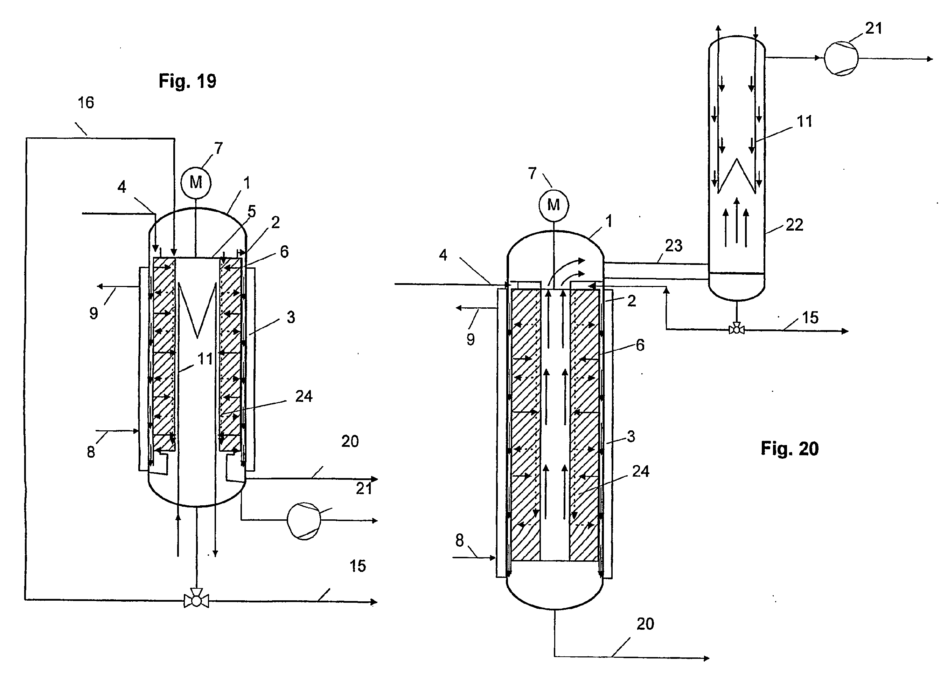

Die Erfindung ist nachfolgend anhand der Zeichnung, in der Dünnschichtverdampfer in schematischen Schnittdarstellungen gezeigt sind, an mehreren Ausführungsbeispielen näher erläutert, wobei die Fig. 2, 4, 6, 17 und 18 nicht anspruchsgemäß sind und die Fig. 1 bis 7 und 12 jeweils Rotorverdampfer zeigen. Die Fig. 8 bis 11 veranschaulichen Einbauten des Rotorverdampfers nach Fig. 7 und die Fig. 13 bis 16 Einbauten des Rotorverdampfers der Fig. 12. In Fig. 17 ist ein Fallfilmverdampfer veranschaulicht und Fig. 18 stellt einen Schnitt quer zu dessen Längsachse gemäß der Linie AA dar. Die Fig. 19 und 29 stellen weitere Varianten dar.

Der Rotorverdampfer nach Fig. 1 weist eine zylindrische, aufrecht stehende, oben und unten geschlossene Trommel 1 auf, deren zylindrischer Teil 2 von einem Heizmantel 3 umgeben ist. Im oberen Bereich der Trommel 1 ist eine Zuführung 4 für das zu verdampfende Medium vorgesehen. In der Trommel 1 ist ein Rotor 5 mit Wischeinrichtung 6 angeordnet, der von einem außerhalb der Trommel 1 angeordneten Motor 7 antreibbar ist. Die Zuführung 8 eines Heizmediums befindet sich am unteren Ende des Heizmantels 3, die Ableitung 9 des Heizmediums am oberen Ende desselben.

Bei Einsatz von Dampf als Heizmedium befindet sich die Zuführung am oberen Ende des Heizmantels und die Ableitung des Kondensators am unteren Ende.

Der Rotor 5 ist nur am oberen Ende der Trommel 1 hängend drehgelagert und als unten offener zylinderförmiger Korb gestaltet.

Das zu verdampfende Medium wird von oben auf die Innenwand 10 des zylindrischen Teiles 2 der Trommel 1 aufgegeben und läuft als Flüssigkeitsfilm an der Innenwand 10 herab, wobei das Medium bis zum Sieden erhitzt wird. Während des Herunterlaufens des Flüssigkeitsfilms des Mediums wird die Flüssigkeit immer wieder von den Wischblättern der Wischeinrichtung 6 des Rotors 5 auf der Innenwand 10 der Trommel 1 ausgestrichen, wodurch der Verdampfungsprozess beschleunigt wird.

Im Zentrum der Trommel 1 befindet sich ein Kondensator 11, der von einem kühlen Medium durchstömt wird. Die Zuführung 12 des Kühlmediums und die Ableitung 13 des Kühlmediums befinden sich am unteren Ende der Trommel 1.

Erfindungsgemäß ist der Kondensator 11 von einem weiteren Kondensator 14 umgeben, der somit zwischen dem zentral liegenden Kondensator 11 und dem Rotor 5 und dessen Wischeinrichtung 6 zu liegen kommt. Die aus dem zu verdampfenden Medium gebildeten heißen Brüden werden an den beiden Kondensatoren 11 und 14 kondensiert und strömen entlang dieser zum unteren Ende der Trommel 1, wo sich der Ablauf 15 für das Destillat befindet.

Erfindungsgemäß wird das zu verdampfende Medium dem zwischen dem zentral angeordneten Kondensator 11 und der Wischeinrichtung 6 angeordneten Kondensator 14 über eine Zuleitung 16 zugeführt und über diesen beim Kondensieren der heißen Brüden vorgewärmt. Dieses vorgewärmte, zu verdampfende Medium gelangt dann über eine Ableitung 17 des Kondensators 14 und eine Leitung 18 zum oberen Ende der Trommel 1, wo es über die Zuführung 4 eingebracht und mit Hilfe des Rotors 5 radial nach außen auf die Innenwand 10 der Trommel 1 verteilt wird.

Der Rückstand, d.h. der nicht verdampfte Teil des zu verdampfenden Mediums, fließt über die Innenwand 10 der Trommel 1 bis zum unteren Ende, wo er in einem Ringraum 19 aufgefangen und aus der Trommel 1 über eine Ableitung 20 abgeleitet wird. Eine Vakuumpumpe ist mit 21 bezeichnet.

Gemäß der in Fig. 2 dargestellten Ausführungsform sind die in Fig. 1 im Inneren der Trommel 1 angeordneten Kondensatoren 11, 14 außerhalb der Trommel 1 in einem eigenen zylinderförmigen Gefäß 22 vorgesehen. Die heißen Brüden werden am oberen Ende der Trommel 1 abgezogen und über ein die Trommel 1 mit dem Gefäß 22, in dem sich die Kondensatoren 11 und 14 befinden, verbindendes Rohr 23 zu den Kondensatoren 11 und 14 geleitet. Die Vakuumpumpe 21 ist in diesem Fall an dem Gefäß 22 angeschlossen. Für diese Ausführungsform erübrigt sich der Ringraum 19 zum Auffangen des Rückstandes; dieser wird am unteren Ende der Trommel 1 abgezogen.

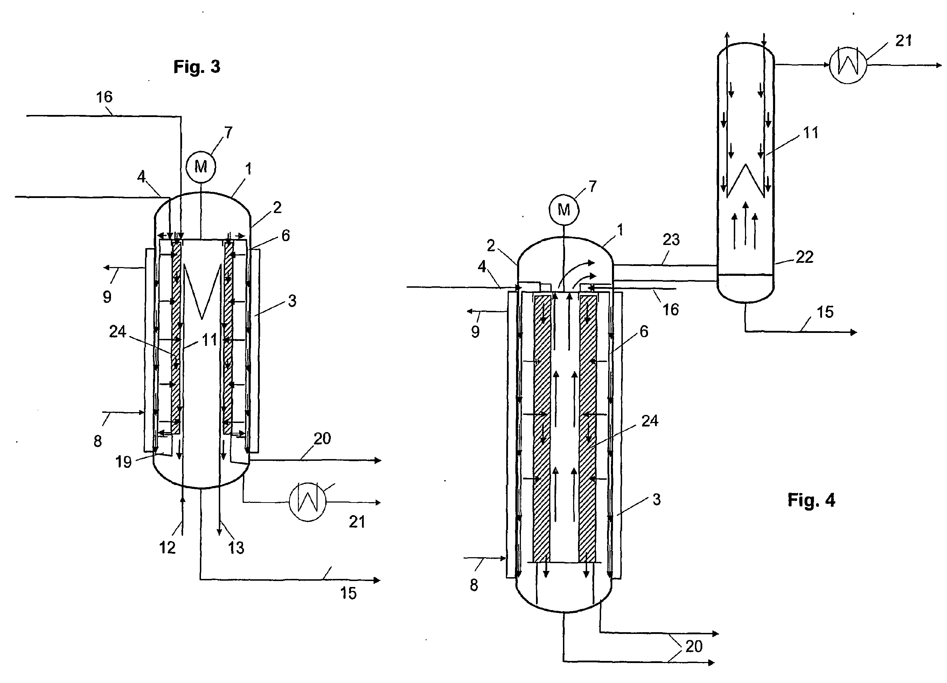

Fig. 3 veranschaulicht einen Rotorverdampfer ähnlich der in Fig. 1 gezeigten Bauweise, wobei jedoch keine Vorwärmung des zu verdampfenden Mediums im Inneren der Trommel 1 vorgesehen ist; hier ist vielmehr zwischen dem vom Kühlmedium durchströmten zentral angeordneten Kondensator 11 und den Wischeinrichtung 6 eine Inneneinrichtung 24 vorgesehen, wie z.B. ein Drahtdoppelzylinder, der einen zylindrischen Ringraum von etwa der Höhe des zylindrischen Teiles 2 der Trommel 1 bildet. In diesem zylindrischen Ringraum ist es möglich, Katalysatoren bzw. Füllkörper zur Erhöhung der von der Inneneinrichtung 24 gebildeten Stoffaustauschfläche vorzusehen. Über eine weitere Zuleitung 16 am oberen Ende der Trommel 1 ist es möglich, eine Reaktionsflüssigkeit, eine Reinigungsflüssigkeit oder auch Destillat dieser Inneneinrichtung 24 zwischen Kondensator 11 und Wischeinrichtung 6 zuzuführen.

Die Ausführungsform gemäß Fig. 4 unterscheidet sich von der nach Fig. 3 wiederum durch eine Anordnung des Kondensators 11 in einem eigenen Gefäß 22, welches mit der Trommel 1 über eine Rohrleitung 23 analog zu Fig. 2 in Verbindung steht.

Fig. 5 veranschaulicht die Zuführung von Destillat zur zwischen dem Kondensator 11 und den Wischeinrichtung 6 angeordneten Inneneinrichtung 24 eines Dünnschichtverdampfers, der analog zu dem in Fig. 3 gezeigten gestaltet ist.

Fig. 6 zeigt wiederum das Pendant hierzu mit außenliegendem Kondensator 11.

In Fig. 7 ist ein modifizierter Rotorverdampfer dargestellt, der einen schlangenförmigen Kondensator 11 aufweist, über den ein an der Oberseite geschlossenes Drahtgestrick 27 gesetzt ist. Den unteren Teil des Drahtgestrickes 27 bildet ein zylindrisches Rohr 28, das so ausgeführt ist, dass es auf einem Austrittstutzen 29 für das Destillat bzw. Abgas aufsitzt und somit eine Trennung des Kondensatorraums 30 vom Verdampferraum 31 bewirkt. Das Drahtgestrick 27 bewirkt durch einen teilweisen Kontakt mit dem Kondensator 11, dass ein Teil des Destillats in das Drahtgestrick 27 gelangt und so für einen Stoffaustausch zur Verfügung steht.

An der Unterseite des Rotors 5 ist ein Stützring 32 vorgesehen, der die Aufgabe übernimmt, überschüssige Flüssigkeit, die von dem die Inneneinrichtung bildenden Drahtgestrick 27 abtropft, aufzufangen und mittels der von der Rotationsbewegung hervorgerufenen Fliehkraft an die Verdampferfläche, d.h. an die Innenseite 10 der Trommel 1 zu führen. Am oberen Ende der Trommel 1 ist das Zuführrohr 33 für die Aufgabe des Einsatzstoffes angebracht.

Gemäß dem in Fig. 12 dargestellten Rotorverdampfer ist über dem Kondensator 11 ein Drahtdoppelzylinder 34 vorgesehen, der zur Aufnahme eines Katalysators dient. Der untere Teil des Drahtdoppelzylinders 34 bildet einen Ring 35, der auf dem Austrittstutzen 29 für das Destillat aufsitzt und somit eine Trennung des Kondensatorraums 30 zum Verdampferraum 31 ergibt. Der Oberteil des Drahtdoppelzylinders 34 ist offen ausgeführt, sodass die über einen Aufgabeteller 36 zugeführte Flüssigkeit über Bohrungen 37 auch auf den im Drahtdoppelzylinder 34 befindlichen Katalysator gelangt. Die Unterseite des Rotors 5 weist ebenfalls einen Stützring 38 auf, der dazu dient, überschüssige Flüssigkeit, die von der Inneneinrichtung 34 nach unten tropft, aufzufangen und mittels der von der Rotationsbewegung hervorgerufenen Fliehkraft an die Verdampferfläche, d.h. an die Innenseite 10 der Trommel 1 zu führen. Am oberen Ende der Trommel 1 ist eine Zuführungsleitung 4 für den Einsatzstoff und eine Zuführungsleitung 33 für die Aufgabe von Flüssigkeit vorgesehen.

Fig. 17 zeigt einen Fallfilmverdampfer mit mehreren von einem Heizmedium jeweils umspülten Trommeln 1, die gemeinsam in einem Gefäß eingebaut sind. Zu jeder Trommel 1 ist zentral ein Kondensator 11 eingesetzt, und zwischen diesem und der Innenwand 10 der Trommel 1 ist eine Inneneinrichtung 24, 27 oder 34 gemäß einer der oben beschriebenen Ausführungen eingebaut.

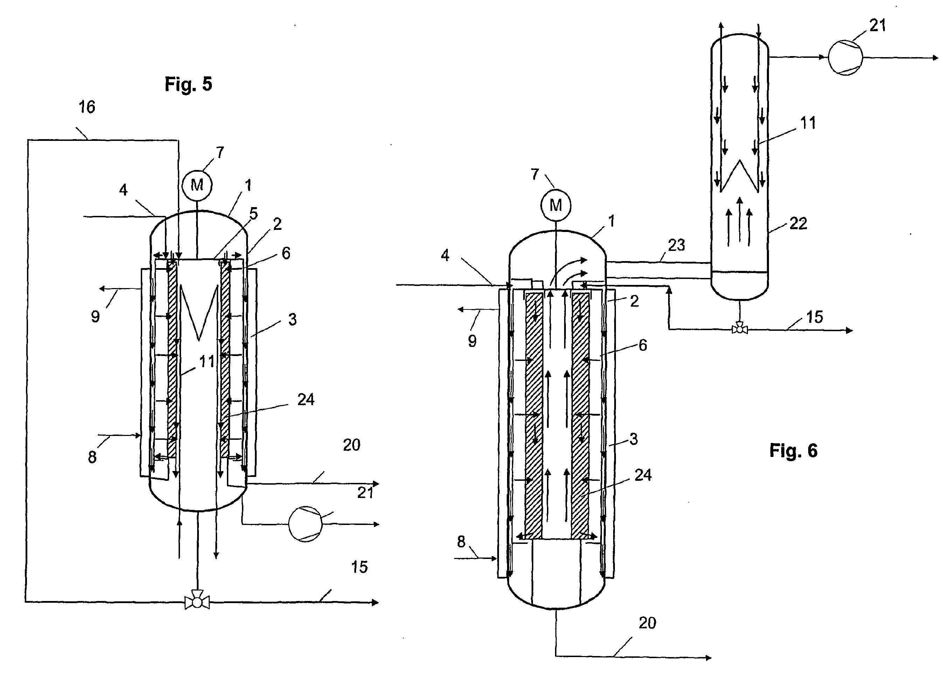

Gemäß einer weiteren Variante kann die Inneneinrichtung auch rotieren. Dies führt dazu, dass die zugeführte bzw. die auf der Inneneinrichtung abgeschiedene bzw. kondensierte Flüssigphase durch die mittels Rotation erzeugte Fliehkraft ganz oder teilweise auf die Verdampferfläche zurückgeführt wird. Zwei Varianten mit rotierender Inneneinrichtung 24 sind in den Fig. 19 und 20 veranschaulicht. Es handelt sich um Ausführungsformen gemäß den in den Fig. 5 und 6 dargestellten. Die Inneneinrichtung 24 ist jeweils mit der rotierenden Wischereinrichtung 6 verbunden - wird somit durch den Motor 7 angetrieben.

Die nachfolgenden Beispiele veranschaulichen den Einsatz der erfindungsgemäßen Dünnschichtverdampfer.

### Beispiel 1

In einem Dünnschichtverdampfer gemäß Fig. 7 - jedoch ohne Drahtgestrick 27 - wurden 780 g Fettsäuremethylester bei 0,2 mbar Druck destilliert. Die Temperatur des Wärmeträgeröls betrug 165°C. Die Ausbeute (Destillat/Einsatzmenge) an Destillat betrug 97,8 %. Vom Destillat wurde eine Probe mittels Rasterelektronenmikroskopie untersucht. Es wurden Spuren von Salzkristallen (Größe ca. 1 µm) gefunden.

Das gleiche Ausgangsprodukt wurde in derselben Apparatur bei gleichen Bedingungen destilliert, jedoch wurde über die innere Kühlschlange ein an der Oberseite geschlossenes Drahtgestrick 27 gesetzt.

### Ergebnis:

Eine Probe des Destillats wurde wiederum mit dem Rasterelektronenmikroskop untersucht. Es wurden keine Spuren von kristallinen Stoffen oder sonstigen Verunreinigungen gefunden. Ein besonderer Vorteil des Drahtgestrickes ist, dass Spritzer des zu verdampfenden Mediums nicht zum Kondensator 11 und daher in Rückstand gelangen.

### Beispiel 2

Ein Dünnschichtverdampfer gemäß Fig. 1 - jedoch ohne Kondensator 14 - mit 9 m² Verdampferfläche wurde mit 1.820 kg/h Feedstrom kontinuierlich geschickt. Die Feedtemperatur betrug 40°C. Der Verdampfer wurde mit Hochdruckdampf 20 bar abs beheizt, wobei die Heiztemperatur über Druckventile eingestellt wurde. Der Destillationsdruck betrug 0,8 mbar. Als Destillat wurden 1.690 kg/h abgezogen. Der Rückstand betrug 112 kg/h. Das entspricht einem Rückstandsverhältnis (Rückstand/Destillat) von 6,6 %. Bei dieser Einstellung wurden 598 kg/h Dampf verbraucht.

Bei konstanten Bedingungen wurde in einem weiteren Schritt der Feedstrom über eine als Vorwärmer und als Kondensator 14 wirkende Rohrschlange, die um den zentralen Kondensator 11 gewickelt war, geführt.

### Ergebnis:

Die Feedtemperatur vor dem Eintritt in den Verdampfer konnte auf 129°C angehoben werden. Der Dampfverbrauch der Destillation sank auf 406 kg/h.

Das entspricht einer Energieeinsparung von 32 %.

### Beispiel 3

In einem Dünnschichtverdampfer gemäß Fig. 7 - jedoch ohne Drahtgestrick für den ersten Versuch-wurden in zwei Versuchen je 800 g Glycerinphase bei 1,3 mbar Druck destilliert. Die Zusammensetzung der Glycerinphase sowie des gewonnenen Destillats des Versuchs 1 (Menge 656 g) ist aus Tabelle 1 ersichtlich.

Für den Versuch 2 wurden folgende Modifikationen am Verdampfer vorgenommen. Über den inneren Kondensator 11 wurde ein an der Oberseite geschlossenes Drahtgestrick 27 (Maschenweite 1mm; Drahtdurchmesser ca. 0,2 mm; mehrlagig gewickelt; Gesamtstärke ca. 4 mm) gesetzt. Den unteren Teil bildete ein zylindrisches Rohr 28, das so ausgeführt war, dass es auf den Austrittstutzen 29 für das Destillat bzw. Abgas aufgesetzt werden konnte und somit eine Trennung des Kondensatorraums 30 zum Verdampferraum 31 gegeben war. Durch den teilweisen Kontakt des Drahtgestricks 27 mit dem Kondensator 11 wurde so die Voraussetzung geschaffen, dass ein Teil des Destillats in das Drahtgestrick 27 gelangen konnte, um für den Stoffaustausch zur Verfügung zu stehen.

Am Rotor 5 wurde im unteren Drittel ein zusätzlicher Stützring 32 eingebaut, der die Aufgabe hatte, die Flüssigkeit, die vom Drahtgestrick 27 nach unten tropfte, aufzufangen und mittels der von der Rotationsbewegung hervorgerufenen Fliehkraft an die Verdampferfläche 10 zu führen.

### Ergebnis:

Die Betriebsparameter für den Versuch 2 waren gleich wie beim Versuch 1. Es wurden 658 g Destillat erhalten. Die Zusammensetzung des Destillats (siehe Tabelle 1) ergab höhere Reinheiten hinsichtlich der leichtflüchtigen und schwerflüchtigen Bestandteile.

**Tabelle 1**

| Beispiel 3 Konz. in Gew. % | Einsatz Versuch 1 + 2 | Destillat Versuch 1 | Destillat Versuch 2 |
|---|---|---|---|
| Glycerin | 84,7 | 97,6 | 98,9 |
| Wasser | 0,4 | 0,3 | 0,1 |
| Asche | 5,8 | 0,1 | n.n. |
| MONG (berechnet) | 9,1 | 2,1 | 1,0 |
| Ester | 2,6 | 0,2 | 0,08 |

### Beispiel 4

In einem Dünnschichtverdampfer gemäß Fig. 12, jedoch ohne Inneneinrichtung 24 für Versuch 3, wurden bei den Versuchen 3, 4 und 5 je 800 g einer Fettsäuremethylesterphase bei 0,5 mbar Druck destilliert.

Für die Versuche 4 und 5 wurden folgende Modifikationen am Verdampfer vorgenommen. Über den inneren Kondensator 11 wurde ein mit dem Katalysator Amberlyst (= Aminsubstituierter fester Ionenaustauscher) 15 gefüllter Drahtdoppelzylinder 34 (Maschenweite 1 mm; Drahtdurchmesser ca. 0,2 mm; Gesamtstärke (Außenradius - Innenradius) ca. 10 mm) gesetzt.

Den unteren Teil bildete ein Ring 35, der so ausgeführt war, dass er auf den Austrittstutzen 29 für das Destillat bzw. Abgas aufgesetzt werden konnte und somit eine Trennung des Kondensatorraums 30 zum Verdampferraum 31 gegeben war.

Der Oberteil war offen ausgeführt, sodass die über den Aufgabeteller 34 zugeführte Flüssigkeit über Bohrungen 37 auf den im Drahtdoppelzylinder 24 befindlichen Katalysator gelangen könnte.

Der Ring 35 an der Unterseite des Rotors 5 hatte die Aufgabe, die überschüssige Flüssigkeit, die von der Inneneinrichtung 34 nach unten tropfte, aufzufangen und mittels der von der Rotationsbewegung hervorgerufenen Fliehkraft an die Verdampferfläche 10 zu führen.

Über einen zusätzlichen Stutzen 33 im Oberteil des Verdampfers wurden während des gesamten Versuchs 5 gleichmäßig 100 g Ölsäure zugegeben, die über den Aufgabe- bzw. Verteilerteller 36 auf die Inneneinrichtung 34 gelangen konnte, um mit dem in der Fettsäuremethylesterphase enthaltenen Methanol zu reagieren.

Die Betriebsparameter für die Versuche 4 und 5 waren gleich wie beim Versuch 3, der ohne die Inneneinrichtung 34 bzw. ohne Zugabe von Ölsäure durchgeführt wurde.

### Ergebnis:

Die Mengen und Zusammensetzungen der Versuche von Einsatzstoff und Destillat sind in Tabelle 2 angeführt.

Bei Versuch 4 war die Neutralisationszahl niedriger als bei Versuch 3, da freie Fettsäure und Methanol im Verdampfer zu Fettsäuremethylester reagierten.

Bei Versuch 5 war die Menge an Fettsäuremethylester deutlich höher und die Neutralisationszahl niedriger als bei Versuch 3, da freie Fettsäuren des Ausgangsprodukts und Ölsäure im Verdampfer mit Methanol zu Methylester reagierten.

**Tabelle 2**

| Beispiel 4 | | Einsatz Versuch 3+4 | Destillat Versuch 3 | Destillat Versuch 4 | Destillat Versuch 5 |
|---|---|---|---|---|---|
| Menge | g | 800 | 760 | 760 | 810 |
| Methylester | % Gew. | 94,7 | 97,6 | 97,8 | 98,9 |
| Wasser | ppm | 800 | 40 | 50 | 50 |
| Methanol | % Gew. | 1,0 | n.n. | n.n. | n.n. |
| Neutralisationszahl | mg KOH/g | 0,4 | 0,35 | 0,07 | 0,09 |

### Beispiel 5

In einem Dünnschichtverdampfer gemäß Fig. 12 - jedoch ohne Inneneinrichtung 34 bei Versuch 6 - wurden bei den Versuchen 6 und 7 je 800 g Methylesterphase bei 0,5 mbar Druck destilliert.

Für den Versuch 7 wurden folgende Modifikationen am Verdampfer vorgenommen. Über den inneren Kondensator 11 wurde ein mit Glaskugeln (Durchmesser 4 mm) gefüllter Drahtdoppelzylinder 34 (Maschenweite 1 mm; Drahtdurchmesser ca. 0,2 mm; Gesamtstärke (Außenradius - Innenradius) ca. 10 mm) gesetzt.

Den unteren Teil bildete ein Ring 35, der so ausgeführt war, dass er auf den Austrittsstutzen 29 für Destillat bzw. Abgas aufgesetzt werden konnte und somit eine Trennung des Kondensatorraums 30 zum Verdampferraum 31 gegeben war.

Der Oberteil ist offen ausgeführt, sodass die über den Aufgabeteller 36 zugeführte Flüssigkeit über Bohrungen 37 auf die im Drahtdoppelzylinder 34 befindlichen Glaskugeln gelangen konnte.

Der Stützring 38 an der Unterseite des Rotors 5 hatte die Aufgabe, die überschüssige Flüssigkeit, die von dem Drahtdoppelkorb 24 nach unten tropfte, aufzufangen und mittels der von der Rotationsbewegung hervorgerufenen Fliehkraft an die Verdampferfläche 10 zu führen.

Über einen zusätzlichen Stutzen 33 im Oberteil des Verdampfers wurden während des gesamten Versuchs gleichmäßig 80g Trioctylamin zugegeben, das über den Aufgabeteller 36 auf die Inneneinrichtung 34 gelangen konnte, um Stoffe aus der Gasphase zu absorbieren.

Die Betriebsparameter für den Versuch 7 waren gleich wie beim Versuch 6, der ohne diesen Einbau durchgeführt wurde.

### Ergebnis:

Durch die Modifikation wurde bei Versuch 7 eine höhere Reinheit des Destillats erzielt (siehe Tabelle 3).

**Tabelle 3**

| Beispiel 5 | | Einsatz Versuch 6 + 7 | Destillat Versuch 6 | Destillat Versuch 7 |
|---|---|---|---|---|
| Menge | g | 800 | 760 | 756 |
| Methylester | % Gew. | 94,7 | 97,6 | 97,9 |
| Wasser | ppm | 800 | 40 | 35 |
| Methanol | % Gew. | 1,0 | n.n. | n.n. |
| Neutralisationszahl | mg KOH/g | 0,4 | 0,35 | 0,05 |

### Zusammenfassung:

Die besonderen Vorteile der erfindungsgemäßen Dünnschichtverdampfer sind in der Erhöhung der Trennleistung durch den Einbau von Stoffaustauschflächen direkt im Verdampfungsraum, durch die Aufgabe von Rücklauf auf die Stoffaustauschfläche, durch die Rückführung des Flüssigkeitsstroms an die Verdampferfläche sowie durch die Aufgabe von Reinigungsflüssigkeit gegeben.

Mit Hilfe der erfindungsgemäßen Dünnschichtverdampfer können chemische Reaktionen durchgeführt werden, und zwar durch den Einbau heterogener Katalysatoren in den Verdampfungsraum und/oder durch den Einbau von Stoffaustauschflächen sowie durch eine Zugabe von Reaktionspartnern direkt in den Verdampfungsraum. Somit lassen sich erfindungsgemäß Kombinationen von Destillation, Absorption und chemischer Reaktion durchführen.

Als Stoffaustauschflächen kommen Rohre, Packungen, Gestricke, Füllkörper oder Böden in Frage.

Durch den Einbau von Temperaturaustauschflächen, wie z.B. in Fig. 1 dargestellt, ist zudem eine erhebliche Energieeinsparung bei Betrieb des Dünnschichtverdampfers möglich.

## Patentansprüche

1. Dünnschichtverdampfer mit einer senkrecht stehenden Trommel (1), einer im oberen Bereich der Trommel (1) angeordneten Zuführung (4) für ein zu verdampfendes Medium, einem an ihrem Umfang angeordneten, Brüden bildenden Heizmantel (3), einer den Rückstand im unteren Endbereich der Trommel ableitenden Ableitung (20) sowie einem mit einem Kühlmedium versorgten, im Zentralbereich der Trommel (1) angeordneten Kondensator (11) und einer innenseitig (bei 10) entlang des Trommelmantels bewegbaren Wischeinrichtung (5,6) für ein von oben in die Trommel (1) eingeleitetes zu verdampfendes Medium, **dadurch gekennzeichnet, dass** auf dem Weg der Brüden vom Heizmantel (3) zum Kondensator (11) eine die Wirkungsweise des Dünnschichtverdampfers beeinflussende Inneneinrichtung (14, 24, 27, 34) vorgesehen ist, wobei die Inneneinrichtung (14, 24, 27, 34) zwischen dem Kondensator (11) und der Wischeinrichtung (5, 6) vorgesehen ist.

## Claims

1. A thin-film evaporator comprising a vertical drum (1), a supply line (4) that is arranged in the upper region of the drum (1) and is used to supply a medium to be evaporated, a heating jacket (3) arranged on the periphery of the drum and forming vapours, a discharge line (20) for discharging the residue left in the lower end of the drum, and a condenser (11) supplied with a coolant and arranged in the central region of the drum (1) and a wiping device (5, 6) movable on the inside (at 10) along the drum jacket for a medium to be evaporated which is introduced into the drum (1) from above, **characterized in that** an inner device (14, 24, 27, 34) influencing the action of the thin-film evaporator is provided in the path of the vapours from the heating jacket (3) to the condenser (11), with the inner device (14, 24, 27, 34) being provided between the condenser (11) and the wiping device (5, 6).

## Revendications

1. Evaporateur à couche mince, avec un tambour (1) monté verticalement, une alimentation (4), disposée dans la zone supérieure du tambour (1), pour un fluide à évaporer, une enveloppe de chauffage (3) formant des buées, disposée sur sa périphérie, une évacuation (20) évacuant le résidu dans la zone d'extrémité inférieure du tambour, ainsi qu'un condenseur (11) disposé dans la zone centrale du tambour (1), alimenté avec un fluide de refroidissement, et un dispositif d'essuyage (5, 6), déplaçable côté intérieur (en 10) le long de l'enveloppe de tambour, pour un fluide à évaporer, introduit par le haut dans le tambour (1), **caractérisé en ce qu'**un dispositif intérieur (14, 24, 27, 34), influant sur le mode d'action de l'évaporateur à couche mince, est prévu sur le chemin des buées, de l'enveloppe de chauffage (3) au condenseur (11), le dispositif intérieur (14, 24, 27, 34) étant prévu entre le condenseur (11) et le dispositif d'essuyage (5, 6).
